# EUROPÄISCHE PATENTSCHRIFT

(11) **EP 2 245 336 B1**
(45) Veröffentlichungstag und Bekanntmachung des Hinweises auf die Patenterteilung: **24.10.2012**
(21) Anmeldenummer: 09714867.0
(22) Anmeldetag: 04.02.2009
(51) Int. Cl.: F16H 3/66

(54) **MEHRSTUFENGETRIEBE**
MULTI-STAGE GEARBOX
BOÎTE DE VITESSES MULTI-ÉTAGÉE

(30) Priorität: 28.02.2008 DE 102008000429
(43) Veröffentlichungstag der Anmeldung: 03.11.2010
(73) Patentinhaber: ZF Friedrichshafen AG, 88038 Friedrichshafen (DE)
(72) Erfinder: BAUKNECHT, Gert, 88048 Friedrichshafen (DE); GUMPOLTSBERGER, Gerhard, 88045 Friedrichshafen (DE); ZIEMER, Peter, 88069 Tettnang (DE); MOHR, Mark, 88069 Tettnang (DE)
(86) Internationale Anmeldenummer: PCT/EP2009/051228
(87) Internationale Veröffentlichungsnummer: WO 2009/106409

(56) Entgegenhaltungen:
- DE-A1- 10 115 987
- DE-A1- 19 949 507
- DE-A1-102005 032 881
- DE-A1-102006 006 636

## Beschreibung

Die vorliegende Erfindung betrifft ein Mehrstufengetriebe in Planetenbauweise, insbesondere ein Automatgetriebe für ein Kraftfahrzeug, gemäß dem Oberbegriff des Patentanspruchs 1 und wie es aus dem Dokument DE 102006006636 A1 bekannt ist

Automatgetriebe, insbesondere für Kraftfahrzeuge, umfassen nach dem Stand der Technik Planetensätze, die mittels Reibungs- bzw. Schaltelementen, wie etwa Kupplungen und Bremsen, geschaltet werden und üblicherweise mit einem einer Schlupfwirkung unterliegenden und wahlweise mit einer Überbrückungskupplung versehenen Anfahrelement, wie etwa einem hydrodynamischen Drehmomentwandler oder einer Strömungskupplung, verbunden sind.

Ein derartiges Getriebe geht aus der EP 0 434 525 A1 hervor. Es umfasst im Wesentlichen eine Antriebswelle und eine Abtriebswelle, die parallel zueinander angeordnet sind, einen konzentrisch zur Abtriebswelle angeordneten Doppelplanetenradsatz und fünf Schaltelemente in der Form von drei Kupplungen und zwei Bremsen, deren wahlweise Sperrung jeweils paarweise die verschiedenen Gangübersetzungen zwischen der Antriebswelle und der Abtriebswelle bestimmt. Hierbei weist das Getriebe einen Vorschaltradsatz und zwei Leistungswege auf, so dass durch das selektive paarweise Eingreifen der fünf Schaltelemente sechs Vorwärtsgänge erzielt werden.

Hierbei werden bei dem ersten Leistungsweg zwei Kupplungen zur Übertragung des Drehmomentes vom Vorschaltradsatz zu zwei Elementen des Doppelplanetenradsatzes benötigt. Diese sind in Kraftflussrichtung im Wesentlichen hinter dem Vorschaltradsatz in Richtung Doppelplanetenradsatz angeordnet. Bei dem zweiten Leistungsweg ist eine weitere Kupplung vorgesehen, die diesen mit einem weiteren Element des Doppelplanetenradsatzes lösbar verbindet. Hierbei sind die Kupplungen derart angeordnet, dass der Innenlamellenträger den Abtrieb bildet.

Des weiteren ist aus der DE 199 49 507 A1 der Anmelderin ein Mehrstufengetriebe bekannt, bei dem an der Antriebswelle zwei nicht schaltbare Vorschaltradsätze vorgesehen sind, die ausgangsseitig zwei Drehzahlen erzeugen, die neben der Drehzahl der Antriebswelle wahlweise auf einen auf die Abtriebswelle wirkenden, schaltbaren Doppelplanetenradsatz durch selektives Schließen der verwendeten Schaltelemente derart schaltbar sind, dass zum Umschalten von einem Gang in den jeweils nächstfolgenden höheren oder niedrigeren Gang von den beiden gerade betätigten Schaltelementen jeweils nur ein Schaltelement zu- oder abgeschaltet werden muss.

Aus der DE 199 12 480 A1 ist ein automatisch schaltbares Kraftfahrzeuggetriebe mit drei Einsteg-Planetensätzen sowie drei Bremsen und zwei Kupplungen zum Schalten von sechs Vorwärtsgängen und einem Rückwärtsgang und mit einer Antriebs- sowie einer Abtriebswelle bekannt. Das automatisch schaltbare Kraftfahrzeuggetriebe ist derart ausgebildet, dass die Antriebswelle direkt mit dem Sonnenrad des zweiten Planetensatzes verbunden ist und dass die Antriebswelle über die erste Kupplung mit dem Sonnenrad des ersten Planetensatzes und/oder über die zweite Kupplung mit dem Steg des ersten Planetensatzes verbindbar ist. Zusätzlich oder alternativ ist das Sonnenrad des ersten Planetensatzes über die erste Bremse mit dem Gehäuse des Getriebes und/oder der Steg des ersten Planetensatzes über die zweite Bremse mit dem Gehäuse und/oder dem Sonnenrad des dritten Planetensatzes über die dritte Bremse mit dem Gehäuse verbindbar.

Des weiteren ist aus der DE 102 13 820 A1 ein Mehrgangautomatikgetriebe bekannt, umfassend einen ersten Eingangspfad T1 eines ersten Übersetzungsverhältnisses; einen Eingangspfad T2, der ein größeres Übersetzungsverhältnis als dieser Eingangspfad T1 hat; einen Planetenradsatz mit vier Elementen, wobei die vier Elemente ein erstes Element, ein zweites Element, ein drittes Element und ein viertes Element in der Reihenfolge der Elemente in einem Drehzahldiagramm sind; eine Kupplung C-2, die eine Drehung des Eingangspfads T2 auf das erste Element S3 überträgt; eine Kupplung C-1, die die Drehung von dem Eingangspfad T2 auf das vierte Element S2 überträgt; eine Kupplung C-4, die eine Drehung von dem Eingangspfad T1 auf das erste Element überträgt; eine Kupplung C-3, die die Drehung von dem Eingangspfad T1 auf das zweite Element C3 überträgt; eine Bremse B-1, die den Eingriff des vierten Elements herstellt; eine Bremse B-2, die den Eingriff des zweiten Elements herstellt; und ein Abtriebselement, das mit dem dritten Element R3 gekoppelt ist.

Im Rahmen der DE 101 15 983 A1 der Anmelderin wird ein Mehrstufengetriebe beschrieben, mit einer Antriebswelle, die mit einem Vorschaltsatz verbunden ist, mit einer Abtriebswelle, die mit einem Nachschaltsatz verbunden ist, und mit maximal sieben Schaltelementen, durch deren wahlweises Schalten mindestens sieben Vorwärtsgänge ohne Gruppenschaltung schaltbar sind. Der Vorschaltsatz wird aus einem Vorschalt-Planetenradsatz oder maximal zwei nicht schaltbaren, mit dem ersten Vorschalt-Planetenradsatz gekoppelten Vorschalt-Planetenradsätzen gebildet, wobei der Nachschaltsatz als Zweisteg-Vierwellen-Getriebe mit zwei schaltbaren Nachschalt-Planetenradsätzen ausgebildet ist und vier freie Wellen aufweist. Die erste freie Welle dieses Zweisteg-Vierwellen-Getriebes ist mit dem ersten Schaltelement verbunden, die zweite freie Welle mit dem zweiten und dritten Schaltelement, die dritte freie Welle mit dem vierten und fünften Schaltelement und die vierte freie Welle ist mit der Abtriebswelle verbunden. Für ein Mehrstufengetriebe mit insgesamt sechs Schaltelementen wird erfindungsgemäß vorgeschlagen, die dritte freie Welle oder die erste freie Welle des Nachschaltsatzes zusätzlich mit einem sechsten Schaltelement zu verbinden. Für ein Mehrstufengetriebe mit insgesamt sieben Schaltelementen wird erfindungsgemäß vorgeschlagen, die dritte freie Welle zusätzlich mit einem sechsten Schaltelement D' und die erste freie Welle zusätzlich mit einem siebten Schaltelement zu verbinden.

Ferner ist im Rahmen der DE 101 15 987 der Anmelderin ein Mehrstufengetriebe mit mindestens sieben Gängen beschrieben. Dieses Getriebe besteht neben der Antriebswelle und der Abtriebswelle aus einem nicht schaltbaren Vorschaltradsatz und einem schaltbaren Nachschaltradsatz in Form eines Zweisteg-Vierwellen-Getriebes. Der Vorschaltradsatz besteht aus einem ersten Planetenradsatz, welcher neben der Eingangsdrehzahl der Antriebswelle eine zweite Drehzahl anbietet, die wahlweise auf einen Nachschaltradsatz geschaltet werden kann. Der Nachschaltradsatz besteht aus zwei schaltbaren Planetenradsätzen, welche mit den sechs Schaltelementen mindestens sieben Gänge schalten kann, wobei zwei Leistungswege gebildet werden. Dabei werden bei jedem Schaltvorgang in vorteilhafter Weise stets Gruppenschaltungen vermieden.

Ein 9-Gang-Mehrstufengetriebe ist ferner aus der DE 29 36 969 bekannt; es umfasst acht Schaltelemente und vier Radsätze, wobei ein Radsatz als Vorschaltgetriebe dient und das Hauptgetriebe einen Simpson-Satz und einen weiteren als Umkehrgetriebe dienenden Radsatz aufweist.

Weitere Mehrstufengetriebe sind beispielsweise aus der DE 102004040597 A1, der DE 102005010210 A1 und der DE102006006637 A1 der Anmelderin bekannt.

Die gattungsbildende DE 102006006636 A1 zeigt ein Planetenradgetriebe mit vier Planetensätzen sowie jeweils die Bremsen und Kupplungen mit welchem neun Vorwärtsgänge und ein Rückwärtsgang realisierbar sind.

Automatisch schaltbare Fahrzeuggetriebe in Planetenbauweise im Allgemeinen sind im Stand der Technik bereits vielfach beschrieben und unterliegen einer permanenten Weiterentwicklung und Verbesserung. So sollen diese Getriebe einen geringen Bauaufwand, insbesondere eine geringe Anzahl an Schaltelementen erfordern und bei sequentieller Schaltweise Doppelschattungen vermeiden, so dass bei Schaltungen in definierten Ganggruppen jeweils nur ein Schaltelement gewechselt wird.

Der vorliegenden Erfindung liegt die Aufgabe zugrunde, ein Mehrstufengetriebe der eingangs genannten Art vorzuschlagen, welches mindestens neun Vorwärtsgänge und mindestens einen Rückwärtsgang mit ausreichender Übersetzung aufweist, bei dem der Bauaufwand und die Baugröße, insbesondere die Baulänge, bzw. das Gewicht optimiert werden und zudem der Wirkungsgrad hinsichtlich der Schlepp- und Verzahnungsverluste verbessert wird. Zudem sollen bei dem erfindungsgemäßen Mehrstufengetriebe geringe Stützmomente auf die Schaltelemente wirken. Insbesondere soll das erfindungsgemäße Getriebe für eine Front-Quer-Bauweise geeignet sein.

Diese Aufgabe wird erfindungsgemäß durch die Merkmale des Patentanspruchs 1 gelöst. Weitere Vorteile und vorteilhafte Ausgestaltungen gehen aus den Unteransprüchen hervor.

Demnach wird ein erfindungsgemäßes Mehrstufengetriebe in Planetenbauweise vorgeschlagen, welches einen Antrieb und einen Abtrieb aufweist, welche in einem Gehäuse angeordnet sind. Des weiteren sind zumindest vier Planetensätze, im Folgenden als erster, zweiter, dritter und vierter Planetensatz bezeichnet, mindestens acht drehbare Wellen - im Folgenden als Antriebswelle, Abtriebswelle, dritte, vierte, fünfte, sechste, siebte und achte Welle bezeichnet - sowie zumindest sechs Schaltelemente, umfassend Bremsen und Kupplungen, vorgesehen, deren selektives Eingreifen verschiedene Übersetzungsverhältnisse zwischen dem Antrieb und dem Abtrieb bewirkt, so dass vorzugsweise neun Vorwärtsgänge und ein Rückwärtsgang realisierbar ist.

Gemäß der Erfindung bilden der erste und der zweite Planetensatz, die vorzugsweise als Minus-Planetensätze ausgebildet sind, einen schaltbaren Vorschaltradsatz, wobei der dritte und der vierte Planetensatz einen Hauptradsatz bilden.

Erfindungsgemäß ist bei dem Mehrstufengetriebe vorgesehen, dass die Stege des ersten und des zweiten Planetensatzes über die vierte Welle miteinander gekoppelt sind, welche mit einem Element des Hauptradsatzes verbunden ist, dass das Hohlrad des ersten Planetensatzes mit dem Sonnenrad des zweiten Planetensatzes über die achte Welle gekoppelt ist, welche über eine erste Kupplung mit der Antriebswelle lösbar verbindbar ist und dass das Sonnenrad des ersten Planetenradsatzes mittels der dritten Welle über eine erste Bremse an ein Gehäuse des Getriebes ankoppelbar und über eine zweite Kupplung mit der Antriebswelle lösbar verbindbar ist, wobei das Hohlrad des zweiten Planetensatzes mittels der fünften Welle über eine zweite Bremse an ein Gehäuse des Getriebes ankoppelbar ist.

Gemäß der Erfindung ist die siebte Welle mit zumindest einem Element des Hauptradsatzes ständig verbunden und über eine dritte Bremse an ein Gehäuse des Getriebes ankoppelbar, wobei die sechste Welle mit zumindest einem weiteren Element des Hauptradsatzes ständig verbunden und über eine dritte Kupplung mit der Antriebswelle lösbar verbindbar ist; die Abtriebswelle ist mit zumindest einem weiteren Element des Hauptradsatzes ständig verbunden.

Gemäß einer ersten Ausführungsform der Erfindung ist die vierte Welle ständig mit dem Hohlrad des dritten Planetensatzes verbunden, wobei die sechste Welle ständig mit dem Hohlrad des vierten Planetensatzes und dem Steg des dritten Planetensatzes verbunden und über die dritte Kupplung mit der Antriebswelle lösbar verbindbar ist. Des weiteren ist die siebte Welle ständig mit den Sonnenrädern des dritten und vierten Planetensatzes verbunden und über die dritte Bremse an ein Gehäuse des Getriebes ankoppelbar. Der Abtrieb erfolgt über die ständig mit dem Steg des vierten Planetensatzes verbundene Abtriebswelle.

Gemäß einer vorteilhaften Weiterbildung der Erfindung ist der Hauptradsatz als Simpson - Radsatz mit einem gemeinsamen breiten Sonnenrad, zwei Stegen und zwei Hohlrädern ausgeführt.

Im Rahmen einer weiteren Ausführungsform der Erfindung wird vorgeschlagen, dass die vierte Welle ständig mit dem Sonnenrad des dritten Planetensatzes verbunden ist, wobei die sechste Welle ständig mit dem Hohlrad des vierten Planetensatzes und dem Steg des dritten Planetensatzes verbunden und über die dritte Kupplung mit der Antriebswelle lösbar verbindbar ist und wobei die siebte Welle ständig mit dem Sonnenrad des vierten Planetensatzes verbunden und über die dritte Bremse an ein Gehäuse des Getriebes ankoppelbar ist. Ferner ist die Abtriebswelle ständig mit dem Hohlrad des dritten und dem Steg des vierten Planetensatzes verbunden.

Gemäß einer dritten Ausführungsform der Erfindung sind der dritte und der vierte Planetensatz zu einem Ravigneaux-Satz mit gemeinsamen Steg und gemeinsamen Hohlrad zusammengesetzt bzw. reduziert.

Hierbei ist die vierte Welle ständig mit dem ersten Sonnenrad des Ravigneaux-Satzes verbunden, wobei die sechste Welle ständig mit dem Hohlrad des Ravigneaux-Satzes verbunden und über die dritte Kupplung mit der Antriebswelle lösbar verbindbar ist und wobei die siebte Welle ständig mit dem zweiten Sonnenrad des Ravigneaux - Satzes verbunden und über die dritte Bremse an ein Gehäuse des Getriebes ankoppelbar ist. Bei dieser Ausführungsform erfolgt der Abtrieb über den Steg des Ravigneaux - Satzes.

Bei der Ausführung des dritten und vierten Planetensatzes als Ravigneaux - Satz kann alternativ vorgesehen sein, dass die vierte Welle mit einem Sonnenrad des Ravigneaux-Satzes verbunden ist, wobei die sechste Welle mit dem gemeinsamen Steg verbunden und über die dritte Kupplung mit der Antriebswelle lösbar verbindbar ist. Des weiteren ist die siebte Welle mit einem Sonnenrad des Ravigneaux-Satzes verbunden und über die dritte Bremse an ein Gehäuse des Getriebes ankoppelbar, wobei der Abtrieb über das gemeinsame Hohlrad des Ravigneaux-Satzes erfolgt.

Durch die erfindungsgemäße Ausgestaltung des Mehrstufengetriebes ergeben sich insbesondere für Personenkraftwagen geeignete Übersetzungen sowie eine erhebliche Erhöhung der Gesamtspreizung des Mehrstufengetriebes, wodurch eine Verbesserung des Fahrkomforts und eine signifikante Verbrauchsabsenkung bewirkt werden.

Darüber hinaus wird mit dem erfindungsgemäßen Mehrstufengetriebe durch eine geringe Anzahl an Schaltelementen, der Bauaufwand erheblich reduziert. In vorteilhafter Weise ist es mit dem erfindungsgemäßen Mehrstufengetriebe möglich, ein Anfahren mit einem hydrodynamischen Wandler, einer externen Anfahrkupplung oder auch mit sonstigen geeigneten externen Anfahrelementen durchzuführen. Es ist auch denkbar, einen Anfahrvorgang mit einem im Getriebe integrierten Anfahrelement zu ermöglichen. Vorzugsweise eignet sich ein Schaltelement, welches im ersten Vorwärtsgang und im Rückwärtsgang betätigt wird.

Des weiteren ergibt sich bei dem erfindungsgemäßen Mehrstufengetriebe ein guter Wirkungsgrad in den Hauptfahrgängen bezüglich der Schlepp- und Verzahnungsverluste.

Ferner liegen geringe Momente in den Schaltelementen und in den Planetensätzen des Mehrstufengetriebes vor, wodurch der Verschleiß bei dem Mehrstufengetriebe in vorteilhafter Weise reduziert wird. Zudem wird durch die geringen Momente eine entsprechend geringe Dimensionierung ermöglicht, wodurch der benötigte Bauraum und die entsprechenden Kosten reduziert werden. Darüber hinaus liegen auch geringe Drehzahlen bei den Wellen, den Schaltelementen und den Planetensätzen vor.

Außerdem ist das erfindungsgemäße Getriebe derart konzipiert, dass eine Anpassbarkeit an unterschiedliche Triebstrangausgestaltungen sowohl in Kraftflussrichtung als auch in räumlicher Hinsicht ermöglicht wird.

Die Erfindung wird im Folgenden anhand der beigefügten Figuren beispielhaft näher erläutert. In diesen stellen dar:
- Figur 1:: Eine schematische Ansicht einer bevorzugten Ausführungsform eines erfindungsgemäßen Mehrstufengetriebes;
- Figur 2:: Eine schematische Ansicht einer weiteren bevorzugten Ausführungsform eines erfindungsgemäßen Mehrstufengetriebes;
- Figur 3:: Eine schematische Ansicht einer dritten bevorzugten Ausführungsform eines erfindungsgemäßen Mehrstufengetriebes;
- Figur 4:: Ein beispielhaftes Schaltschema für ein Mehrstufengetriebe gemäß Figuren 1, 2 und 3;
- Figur 5:: Eine schematische Ansicht einer weiteren bevorzugten Ausführungsform eines erfindungsgemäßen Mehrstufengetriebes;
- Figur 6:: Eine schematische Ansicht einer fünften bevorzugten Ausführungsform eines erfindungsgemäßen Mehrstufengetriebes;
- Figur 7:: Eine schematische Ansicht einer sechsten bevorzugten Ausführungsform eines erfindungsgemäßen Mehrstufengetriebes; und
- Figur 8:: Ein beispielhaftes Schaltschema für ein Mehrstufengetriebe gemäß Figuren 5, 6 und 7.

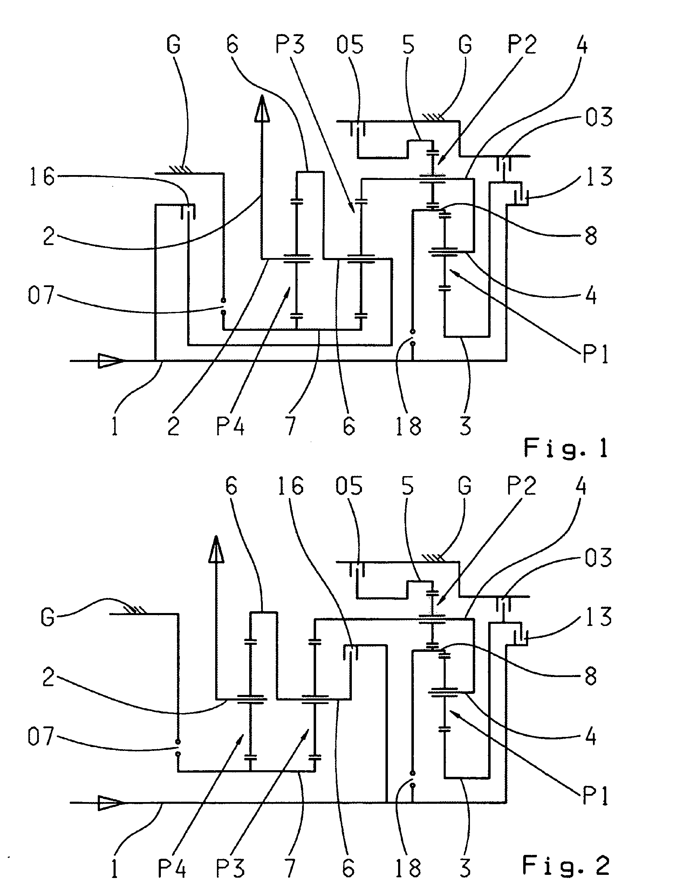

In Figur 1 ist ein erfindungsgemäßes Mehrstufengetriebe mit einer Antriebswelle 1 und einer Abtriebswelle 2 dargestellt, welche in einem Gehäuse G angeordnet sind. Es sind vier Planetensätze P1, P2, P3 und P4 vorgesehen, wobei der erste und der zweite Planetensatz P1, P2, die vorzugsweise als Minus-Planetensätze ausgebildet sind, einen schaltbaren Vorschaltradsatz bilden und wobei der dritte und der vierte Planetensatz P3, P4 den Hauptradsatz bilden.

Wie aus Figur 1 ersichtlich, sind sechs Schaltelemente, nämlich drei Bremsen 03, 05, 07 und drei Kupplungen 13, 16 und 18 vorgesehen. Die räumliche Anordnung der Schaltelemente kann beliebig sein und wird nur durch die Abmessungen und die äußere Formgebung begrenzt.

Mit diesen Schaltelementen ist ein selektives Schalten von neun Vorwärtsgängen und einem Rückwärtsgang realisierbar. Das erfindungsgemäße Mehrstufengetriebe weist insgesamt acht drehbare Wellen auf, nämlich die Wellen 1, 2, 3, 4, 5, 6, 7 und 8.

Erfindungsgemäß ist bei dem Mehrstufengetriebe gemäß Figur 1 vorgesehen, dass die Stege des ersten und des zweiten Planetensatzes P1, P2 über die Welle 4 miteinander gekoppelt sind, welche mit dem Hohlrad des Planetensatzes P3 des Hauptradsatzes verbunden ist, wobei das Hohlrad des ersten Planetensatzes P1 mit dem Sonnenrad des zweiten Planetensatzes P2 über die Welle 8 gekoppelt ist, welche über eine Kupplung 18 mit der Antriebswelle 1 lösbar verbindbar ist.

Des weiteren ist das Sonnenrad des ersten Planetensatzes P1 mittels der Welle 3 über eine Bremse 03 an ein Gehäuse G des Getriebes ankoppelbar und über eine Kupplung 13 mit der Antriebswelle 1 lösbar verbindbar, wobei das Hohlrad des zweiten Planetensatzes P2 mittels der Welle 5 über eine Bremse 05 an ein Gehäuse G des Getriebes ankoppelbar ist. Vorzugsweise weisen die Kupplung 13 und die Bremse 03 einen gemeinsamen Lamellenträger auf.

Wie aus Figur 1 ersichtlich, ist die Welle 6 ständig mit dem Hohlrad des vierten Planetensatzes P4 und dem Steg des dritten Planetensatzes P3 verbunden und über eine Kupplung 16 mit der Antriebswelle 1 lösbar verbindbar, wobei die Welle 7 ständig mit den Sonnenrädern des dritten und vierten Planetensatzes P3, P4 verbunden und über eine Bremse 07 an ein Gehäuse G des Getriebes ankoppelbar ist und wobei der Abtrieb über die ständig mit dem Steg des vierten Planetensatzes P4 verbundene Abtriebswelle 2 erfolgt.

Bei dem gezeigten Beispiel ist der Hauptradsatz, umfassend den dritten und den vierten Planetensatz P3, P4 als Simpson - Radsatz mit einem gemeinsamen breiten Sonnenrad, zwei Stegen und zwei Hohlrädern ausgeführt wobei die Welle 7 mit dem gemeinsamen Sonnenrad verbunden ist. Alternativ zur Ausführung als Simpson-Radsatz können die Planetensätze P3, P4 als separate Radsätze ausgeführt sein.

Ferner ist die Kupplung 16 axial betrachtet in Kraftflussrichtung vor dem Hauptradsatz angeordnet, so dass sich eine Anordnung in der Reihenfolge Kupplung 16, P4, P3, P2, P1 ergibt.

Bei dem gezeigten Ausführungsbeispiel, das sich insbesondere für eine Front-Quer-Bauweise eignet sowie in den nachfolgenden Beispielen sind die den Vorschaltradsatz bildenden Planetensätze P1, P2 radial betrachtet übereinander angeordnet, wodurch sich die insgesamt vier Planetensätze in vorteilhafter Weise räumlich axial betrachtet auf drei Radsatzebenen beschränken. Diese Anordnung kann insbesondere dann ermöglicht werden, wenn die Standübersetzungen der Planetensätze P1 und P2 betragsmäßig hinreichend klein sind. Im Rahmen weiterer Ausführungsformen ist es auch möglich, dass die den Vorschaltradsatz bildenden Planetensätze P1, P2 axial betrachtet nebeneinander angeordnet sind.

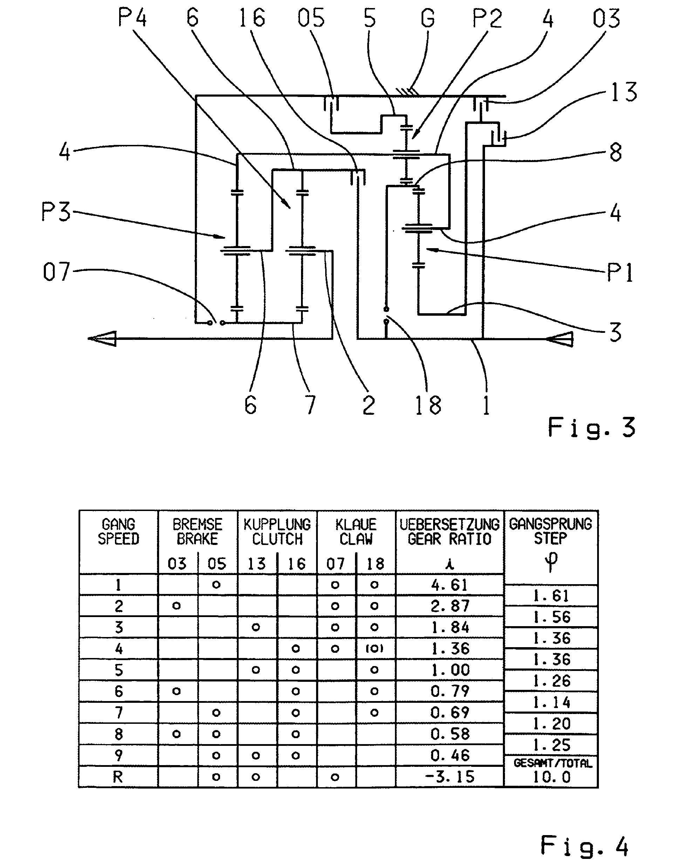

Des weiteren können, wie in Figur 1 sowie in den weiteren Figuren gezeigt, die Kupplung 18 und/oder die Bremse 07 als formschlüssige Schaltelemente bzw. als Klauenschaltelemente ausgeführt sein, was eine Reduzierung von Schleppmomenten bewirkt. Der Einsatz von formschlüssigen Schaltelementen ist dann möglich, wenn diese Schaltelemente ausschließlich bei Hochschaltungen abgeschaltet werden, wie anhand der Beschreibung der Figur 4 erläutert wird. Die weiteren Schaltelemente sind vorzugsweise als Reibschaltelemente ausgebildet. Vorzugsweise ist die Kupplung 18 axial betrachtet zwischen dem Hauptradsatz und dem Vorschaltradsatz angeordnet.

Das in Figur 2 gezeigte Ausführungsbeispiel unterscheidet sich von dem in Figur 1 gezeigten Ausführungsbeispiel dadurch, dass die Kupplung 16, welche die Antriebswelle 1 mit der Welle 6 lösbar verbindet, axial betrachtet zwischen dem dritten und dem zweiten Planetensatz bzw. zwischen dem Hauptradsatz und dem Vorschaltradsatz angeordnet ist, was in vorteilhafter Weise dazu führt, dass wahrnehmbare Quietschgeräusche reduziert bzw. vermieden werden.

Gegenstand der Figur 3 ist ein Ausführungsbeispiel, welches ein erfindungsgemäßes Betriebe in Standardbauweise mit koaxialem Antrieb und Abtrieb zeigt; der Unterschied zum Ausführungsbeispiel gemäß Figur 2 besteht darin, dass die Planetensätze P3, P4 des Hauptradsatzes in umgekehrter Reihenfolge angeordnet sind, so dass sich axial betrachtet eine Anordnung in der Reihenfolge P3, P4, P2, P1 ergibt. Auch in diesem Fall ist die Kupplung 16 axial betrachtet vorzugsweise zwischen dem Hauptradsatz und dem Vorschaltradsatz angeordnet.

In Figur 4 ist ein beispielhaftes Schaltschema eines Mehrstufengetriebes gemäß Figuren 1, 2 und 3 dargestellt, wobei angenommen wird, dass die Kupplung 18 und die Bremse 07 als Klauenschaltelemente (d.h. als Klauenkupplung bzw. Klauenbremse) ausgeführt sind. Für jeden Gang (mit Ausnahme des vierten Ganges) werden drei Schaltelemente geschlossen. Dem Schaltschema können die jeweiligen Übersetzungen i der einzelnen Gangstufen und die daraus zu bestimmenden Gangsprünge bzw. Stufensprünge φ beispielhaft entnommen werden.

Typische Werte für die Standübersetzungen der Planetensätze P1, P2, P3 und P4 sind jeweils -1,80, -1,50, -2,80 und -2,80. Aus Figur 4 wird ersichtlich, dass bei sequentieller Schaltweise Doppelschaltungen bzw. Gruppenschaltungen vermieden werden, da zwei benachbarte Gangstufen zwei Schaltelemente gemeinsam benutzen. Ferner wird ersichtlich, dass eine große Spreizung bei kleinen Gangsprüngen erzielt wird.

Des weiteren sind in vorteilhafter Weise in den Hauptfahrgängen wenige Reibschaltelemente offen: beispielsweise ist im achten und im neunten Gang lediglich ein Reibschaltelement offen, wobei im fünften, sechsten und siebten Gang zwei Reibschaltelemente nicht benötigt werden. Dadurch werden die Schleppmomente aufgrund des geringen Abstandes zwischen den Reibflächen eines Reibschaltelementes im offenen Zustand und des darin enthaltenen Öls bzw. Lüft-Öl-Gemisches reduziert.

Der erste Gang ergibt sich durch Schließen der Kupplung 18 und der Bremsen 05 und 07, der zweite Gang durch Schließen der Bremsen 03 und 07 und der Kupplung 18, der dritte Gang durch Schließen der Bremse 07 und der Kupplungen 13 und 18 und der vierte Gang durch Schließen der Bremse 07 und der Kupplung 16. Der vierte Gang wird nur durch den Hauptradsatz erzeugt; gemäß der Erfindung kann im vierten Gang auch zusätzlich eines der Schaltelemente des Vorschaltradsatzes 03, 05, 13, 18 geschaltet werden, welches dann lastlos bleibt.

Im gezeigten Beispiel ist stellvertretend für die Schaltelemente des Vorschaltradsatzes die Klauenkupplung 18 als optional zu schaltendes Schaltelement für den vierten Gang ausgewählt. Wenn beispielsweise im vierten Gang neben der Bremse 07 und der Kupplung 16 die Bremse 03 geschlossen ist, ist eine Rückschaltung vom achten in den vierten Gang durch Abschalten eines Schaltelementes und Zuschalten eines weiteren Schaltelementes möglich, wobei das Gleiche für eine Rückschaltung vom neunten in den vierten Gang gilt, wenn neben der Bremse 07 und der Kupplung 16 die Bremse 05 geschlossen ist.

Ferner ergibt sich der fünfte Gang, der vorzugsweise als Direktgang ausgebildet ist, durch Schließen der Kupplungen 13, 16 und 18, der sechste Gang durch Schließen der Bremse 03 und der Kupplungen 16 und 18, der siebte Gang durch Schließen der Bremse 05 und der Kupplungen 16 und 18, der achte Gang durch Schließen der Bremsen 03 und 05 und der Kupplung 16 und der neunte Gang durch Schließen der Bremse 05 und der Kupplungen 13 und 16. Wie aus dem Schaltschema ersichtlich, ergibt sich der Rückwärtsgang durch Schließen der Bremsen 05 und 07 und der Kupplung 13.

Dadurch, dass im ersten Vorwärtsgang und im Rückwärtsgang die Bremsen 05 und 07 geschlossen sind, können diese Schaltelemente (als Reibschaltelemente ausgeführt) als Anfahrelemente eingesetzt werden.

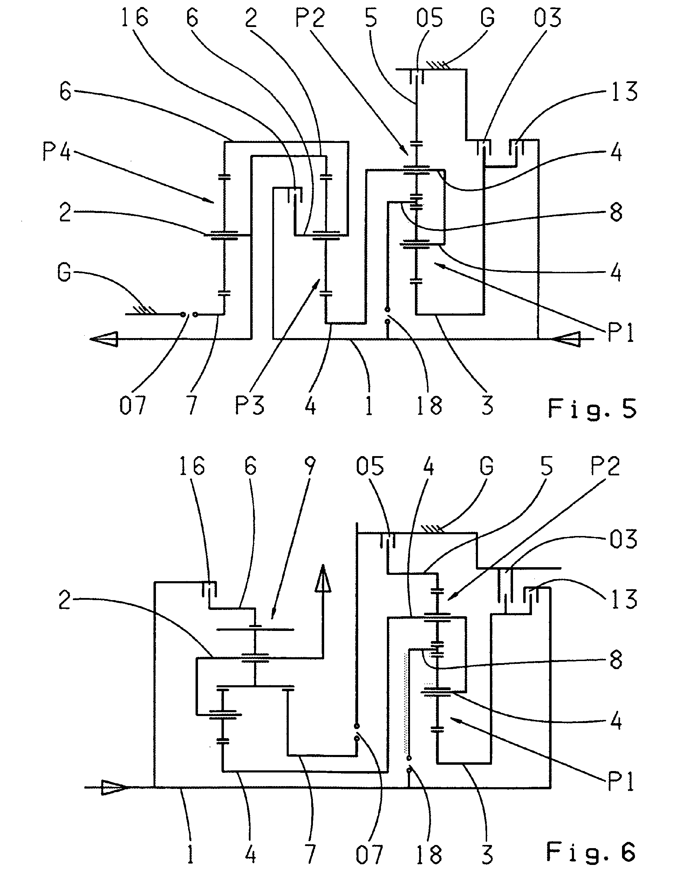

Bei dem Ausführungsbeispiel gemäß Figur 5 ist der Vorschaltradsatz umfassend die Planetensätze P1 und P2 entsprechend dem Vorschaltradsatz gemäß Figuren 1, 2 und 3 ausgeführt, wobei die Kopplung zwischen dem Vorschaltradsatz und dem Hauptradsatz sowie die Kopplungen der Elemente des Hauptradsatzes unterschiedlich sind. Die Planetensätze sind axial betrachtet in der Reihenfolge P4, P3, P2, P1 angeordnet.

Bezugnehmend auf Figur 5 sind die Stege des ersten und des zweiten Planetensatzes P1, P2 über die Welle 4 miteinander gekoppelt, welche mit dem Sonnenrad des Planetensatzes P3 des Hauptradsatzes verbunden ist, wobei das Hohlrad des ersten Planetensatzes P1 mit dem Sonnenrad des zweiten Planetensatzes P2 über die Welle 8 gekoppelt ist, welche über eine Kupplung 18 mit der Antriebswelle lösbar verbindbar ist.

Des weiteren ist das Sonnenrad des ersten Planetensatzes P1 mittels der Welle 3 über eine Bremse 03 an ein Gehäuse G des Getriebes ankoppelbar und über eine Kupplung 13 mit der Antriebswelle 1 lösbar verbindbar, wobei das Hohlrad des zweiten Planetensatzes P2 mittels der Welle 5 über eine Bremse 05 an ein Gehäuse G des Getriebes ankoppelbar ist. Vorzugsweise weisen die Kupplung 13 und die Bremse 03 einen gemeinsamen Innenlamellenträger auf.

Des weiteren ist die Welle 6 ständig mit dem Steg des dritten Planetensatzes P3 und dem Hohlrad des vierten Planetensatzes P4 verbunden und über die Kupplung 16 mit der Antriebswelle 1 lösbar verbindbar, wobei die Welle 7 ständig mit dem Sonnenrad des vierten Planetensatzes P4 verbunden und über die Bremse 07 an ein Gehäuse G des Getriebes ankoppelbar ist. Bei dem gezeigten Beispiel ist die Abtriebswelle 2 ständig mit dem Hohlrad des dritten Planetensatzes P3 und dem Steg des vierten Planetensatzes P4 verbunden. Bei dem gezeigten Beispiel ist die Kupplung 16 axial betrachtet zwischen den Planetensätzen des Hauptradsatzes P3 und P4 angeordnet.

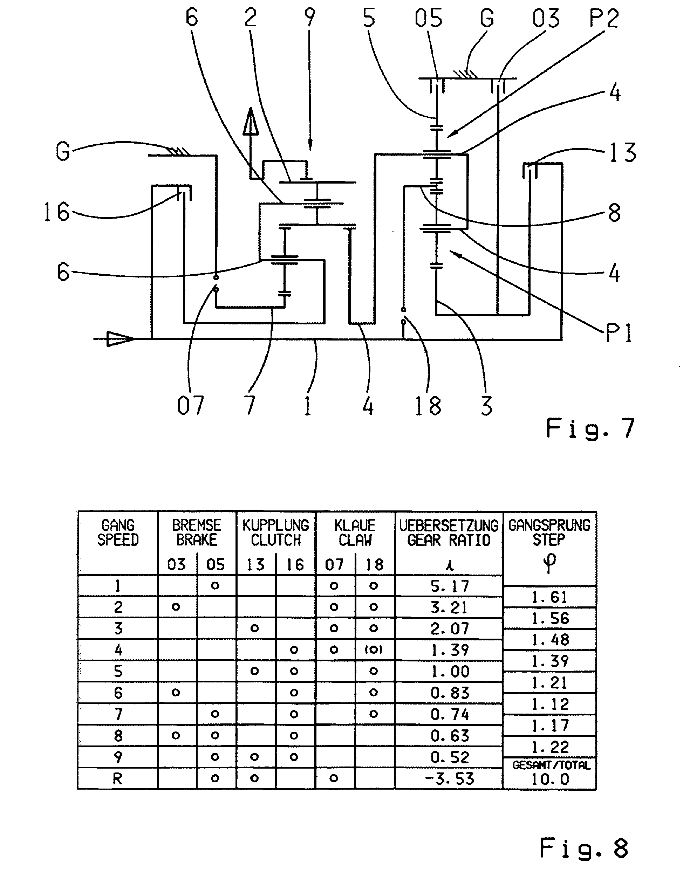

Gemäß weiterer Ausführungsformen der Erfindung, die Gegenstand der Figuren 6 und 7 sind, sind der dritte und der vierte Planetensatz zu einem Ravigneaux-Satz 9 mit gemeinsamen Steg und gemeinsamen Hohlrad zusammengesetzt bzw. reduziert.

Bezugnehmend auf Figur 6 sind die Stege des ersten und des zweiten Planetensatzes P1, P2 über die Welle 4 miteinander gekoppelt, welche mit dem ersten Sonnenrad des Ravigneaux-Satzes 9 verbunden ist, wobei das Hohlrad des ersten Planetensatzes P1 mit dem Sonnenrad des zweiten Planetensatzes P2 über die Welle 8 gekoppelt ist, welche über eine Kupplung 18 mit der Antriebswelle lösbar verbindbar ist.

Des weiteren ist das Sonnenrad des ersten Planetensatzes P1 mittels der Welle 3 über eine Bremse 03 an ein Gehäuse G des Getriebes ankoppelbar und über eine Kupplung 13 mit der Antriebswelle 1 lösbar verbindbar, wobei das Hohlrad des zweiten Planetensatzes P2 mittels der Welle 5 über eine Bremse 05 an ein Gehäuse G des Getriebes ankoppelbar ist. Vorzugsweise weisen die Kupplung 13 und die Bremse 03 einen gemeinsamen Innenlamellenträger auf.

Des weiteren ist die Welle 6 ständig mit dem gemeinsamen Hohlrad des Ravigneaux-Satzes 9 verbunden und über die Kupplung 16 mit der Antriebswelle 1 lösbar verbindbar, wobei die Welle 7 ständig mit dem zweiten Sonnenrad des Ravigneaux - Satzes 9 verbunden und über die Bremse 07 an ein Gehäuse G des Getriebes ankoppelbar ist; der Abtrieb erfolgt über den Steg des Ravigneaux - Satzes 9. Des weiteren ist die Bremse 07 axial betrachtet zwischen dem Vorschaltradsatz und dem Ravigneaux - Satz 9 angeordnet. Bei dem gezeigten Beispiel ist die Kupplung 18 und die Bremse 07 axial betrachtet zwischen dem Hauptradsatz und dem Vorschaltradsatz angeordnet.

Das in Figur 7 gezeigte Beispiel unterscheidet sich vom Ausführungsbeispiel gemäß Figur 6 dadurch, dass die Welle 4 mit dem zweiten Sonnenrad des Ravigneaux-Satzes 9 verbunden ist, wobei die Welle 6 mit dem gemeinsamen Steg verbunden und über die Kupplung 16 mit der Antriebswelle 1 lösbar verbindbar ist. Zudem ist die Welle 7 mit dem ersten Sonnenrad des Ravigneaux-Satzes 9 verbunden und über die Bremse 07 an ein Gehäuse G des Getriebes ankoppelbar, wobei der Abtrieb über das gemeinsame Hohlrad des Ravigneaux-Satzes 9 erfolgt.

Gegenstand der Figur 8 ist ein Schaltschema eines Mehrstufengetriebes gemäß Figuren 5, 6 und 7 dargestellt, wobei angenommen wird, dass die Kupplung 18 und die Bremse 07 als Klauenschaltelemente (d.h. als Klauenkupplung bzw. Klauenbremse) ausgeführt sind. Dieses Schaltschema unterscheidet sich vom Schaltschema nach Figur 4 dadurch, dass die der Berechnung der Übersetzungen und des Stufensprungs zugrunde liegenden Standübersetzungen der Planetensätze P1, P2, P3 und P4 jeweils -1,80, -1,50, -1,70 und -2,54, nach Figur 6 jeweils -1,80, -1,50, +2,70 und -2,54 sowie nach Figur 7 jeweils -1,80, -1,50, -1,70 und +3,54 betragen.

Gemäß der Erfindung können sich auch bei gleichem Getriebeschema je nach Schaltlogik unterschiedliche Gangsprünge ergeben, so dass eine anwendungs- bzw. fahrzeugspezifische Variation ermöglicht wird.

Es ist zudem möglich, an jeder geeigneten Stelle des Mehrstufengetriebes zusätzliche Freiläufe vorzusehen, beispielsweise zwischen einer Welle und dem Gehäuse oder um zwei Wellen gegebenenfalls zu verbinden.

Auf der Antriebsseite oder auf der Abtriebsseite können erfindungsgemäß ein Achsdifferential und/oder ein Verteilerdifferential angeordnet werden.

Im Rahmen einer vorteilhaften Weiterbildung kann die Antriebswelle 1 durch ein Kupplungselement von einem Antriebs-Motor nach Bedarf getrennt werden, wobei als Kupplungselement ein hydrodynamischer Wandler, eine hydraulische Kupplung, eine trockene Anfahrkupplung, eine nasse Anfahrkupplung, eine Magnetpulverkupplung oder eine Fliehkraftkupplung einsetzbar sind. Es ist auch möglich, ein derartiges Anfahrelement in Kraftflussrichtung hinter dem Getriebe anzuordnen, wobei in diesem Fall die Antriebswelle 1 ständig mit der Kurbelwelle des Motors verbunden ist.

Das erfindungsgemäße Mehrstufengetriebe ermöglicht außerdem die Anordnung eines Torsionsschwingungsdämpfers zwischen Motor und Getriebe.

Im Rahmen einer weiteren, nicht dargestellten Ausführungsform der Erfindung kann auf jeder Welle, bevorzugt auf der Antriebswelle 1 oder der Abtriebswelle 2, eine verschleißfreie Bremse, wie z.B. ein hydraulischer oder elektrischer Retarder oder dergleichen, angeordnet sein, was insbesondere für den Einsatz in Nutzkraftfahrzeugen von besonderer Bedeutung ist. Des weiteren kann zum Antrieb von zusätzlichen Aggregaten auf jeder Welle, bevorzugt auf der Antriebswelle 1 oder der Abtriebswelle 2, ein Nebenabtrieb vorgesehen sein.

Die eingesetzten Reibschaltelemente können als lastschaltende Kupplungen oder Bremsen ausgebildet sein. Insbesondere können kraftschlüssige Kupplungen oder Bremsen, wie z.B. Lamellenkupplungen, Bandbremsen und/oder Konuskupplungen, verwendet werden.

Ein weiterer Vorteil des hier vorgestellten Mehrstufengetriebes besteht darin, dass auf jeder Welle als Generator und/oder als zusätzliche Antriebsmaschine eine elektrische Maschine anbringbar ist.

Selbstverständlich fällt auch jede konstruktive Ausbildung, insbesondere jede räumliche Anordnung der Planetensätze und der Schaltelemente an sich sowie zueinander und soweit technisch sinnvoll, unter den Schutzumfang der vorliegenden Ansprüche, ohne die Funktion des Getriebes, wie sie in den Ansprüchen angegeben ist, zu beeinflussen, auch wenn diese Ausbildungen nicht explizit in den Figuren oder in der Beschreibung dargestellt sind.

### Bezugszeichen

- 1: Welle
- 2: Abtriebswelle
- 3: Welle
- 4: Welle
- 5: Welle
- 6: Welle
- 7: Welle
- 8: Welle
- 9: Ravigneaux- Satz
- 03: Bremse
- 05: Bremse
- 07: Bremse
- 13: Kupplung
- 16: Kupplung
- 18: Kupplung
- P1: Planetensatz
- P2: Planetensatz
- P3: Planetensatz
- P4: Planetensatz
- i: Übersetzung
- φ: Stufensprung
- G: Gehäuse

## Patentansprüche

1. Mehrstufengetriebe in Planetenbauweise, insbesondere Automatgetriebe für ein Kraftfahrzeug, umfassend eine Antriebswelle (1) und eine Abtriebswelle (2), welche in einem Gehäuse (G) angeordnet sind, vier Planetensätze (P1, P2, P3, P4), sowie mindestens sechs Schaltelemente (03, 05, 07, 13, 16, 18), umfassend eine erste Bremse (03), eine zweite Bremse (05), eine dritte Bremse (07), eine erste Kupplung (13), eine zweite Kupplung (16) und eine dritte Kupplung (18), deren selektives Eingreifen verschiedene Übersetzungsverhältnisse zwischen der Antriebswelle (1) und der Abtriebswelle (2) bewirkt, so dass neun Vorwärtsgänge und ein Rückwärtsgang realisierbar sind, wobei der erste und der zweite Planetensatz (P1, P2) einen Vorschaltradsatz bilden und der dritte und der vierte Planetensatz (P3, P4) den Hauptradsatz bilden, wobei eine erste drehbare Welle (1), eine zweite drehbare Welle (2), eine dritte drehbare Welle (3), eine vierte drehbare Welle (4), eine fünfte drehbare Welle (5), eine sechste drehbare Welle (6) und eine siebente drehbare Welle (7) vorhanden sind, und wobei das Hohlrad des zweiten Planetensatzes (P2) mittels der fünften Welle (5) über die zweite Bremse (05) an das Gehäuse (G) des Getriebes ankoppelbar ist und wobei die siebente Welle (7) mit zumindest einem Element des Hauptradsatzes ständig verbunden und über die dritte Bremse (07) an das Gehäuse (G) des Getriebes ankoppelbar ist, die sechste Welle (6) mit zumindest einem weiteren Element des Hauptradsatzes ständig verbunden und über die zweite Kupplung (16) mit der Antriebswelle lösbar verbindbar ist und die Abtriebswelle (2) mit zumindest einem weiteren Element des Hauptradsatzes ständig verbunden ist, **dadurch gekennzeichnet, dass** der Vorschaltradsatz schaltbar ist, dass mindestens eine achte drehbare Welle (8) vorhanden ist, wobei die Stege des ersten und des zweiten Planetensatzes (P1, P2) über die vierte Welle (4) miteinander gekoppelt sind, welche mit einem Element des Hauptradsatzes verbunden ist, wobei das Hohlrad des ersten Planetensatzes (P1) mit dem Sonnenrad des zweiten Planetensatzes (P2) über die achte Welle (8) gekoppelt ist, welche über die dritte Kupplung (18) mit der Antriebswelle (1) lösbar verbindbar ist, wobei das Sonnenrad des ersten Planetensatzes (P1) mittels der dritten Welle (3) über die erste Bremse (03) an das Gehäuse (G) des Getriebes ankoppelbar und über die erste Kupplung (13) mit der Antriebswelle (1) lösbar verbindbar ist.

2. Mehrstufengetriebe nach Anspruch 1, **dadurch gekennzeichnet, dass** die vierte Welle (4) mit dem Hohlrad des Planetensatzes (P3) verbunden ist, wobei die sechste Welle (6) ständig mit dem Hohlrad des vierten Planetensatzes (P4) und dem Steg des dritten Planetensatzes (P3) verbunden und über die zweite Kupplung (16) mit der Antriebswelle (1) lösbar verbindbar ist, wobei die siebente Welle (7) ständig mit den Sonnenrädern des dritten und vierten Planetensatzes (P3, P4) verbunden und über die dritte Bremse (07) an das Gehäuse (G) des Getriebes ankoppelbar ist und wobei der Abtrieb über die ständig mit dem Steg des vierten Planetensatzes (P4) verbundene Abtriebswelle (2) erfolgt.

3. Mehrstufengetriebe nach Anspruch 2, **dadurch gekennzeichnet, dass** der Hauptradsatz umfassend den dritten und der vierten Planetensatz (P3, P4) als Simpson - Radsatz mit einem gemeinsamen breiten Sonnenrad, zwei Stegen und zwei Hohlrädern ausgeführt sind, wobei die siebente Welle (7) mit dem gemeinsamen Sonnenrad verbunden ist.

4. Mehrstufengetriebe nach Anspruch 2 oder 3, **dadurch gekennzeichnet, dass** die zweite Kupplung (16) axial betrachtet in Kraftflussrichtung vor dem Hauptradsatz angeordnet ist.

5. Mehrstufengetriebe nach Anspruch 2 oder 3, **dadurch gekennzeichnet, dass** die zweite Kupplung (16) axial betrachtet zwischen dem Hauptradsatz und dem Vorschaltradsatz angeordnet ist.

6. Mehrstufengetriebe nach Anspruch 1, **dadurch gekennzeichnet, dass** die vierte Welle (4) mit dem Sonnenrad des dritten Planetensatzes (P3) verbunden ist, wobei die sechste Welle (6) ständig mit dem Steg des dritten Planetensatzes (P3) und dem Hohlrad des vierten Planetensatzes (P4) verbunden und über die zweite Kupplung (16) mit der Antriebswelle (1) lösbar verbindbar ist, wobei die siebente Welle (7) ständig mit dem Sonnenrad des vierten Planetensatzes (P4) verbunden und über die dritte Bremse (07) an das Gehäuse (G) des Getriebes ankoppelbar ist und wobei die Abtriebswelle (2) ständig mit dem Hohlrad des dritten Planetensatzes (P3) und dem Steg des vierten Planetensatzes (P4) verbunden ist.

7. Mehrstufengetriebe nach Anspruch 6, **dadurch gekennzeichnet, dass** ist die zweite Kupplung (16) axial betrachtet zwischen den Planetensätzen (P3, P4) des Hauptradsatzes angeordnet ist.

8. Mehrstufengetriebe nach Anspruch 1, **dadurch gekennzeichnet, dass** der dritte und der vierte Planetensatz (P3, P4) zu einem Ravigneaux-Satz (9) mit gemeinsamen Steg und gemeinsamen Hohlrad zusammengesetzt bzw. reduziert sind, wobei die vierte Welle (4) mit dem ersten Sonnenrad des Ravigneaux-Satzes (9) verbunden ist, wobei die sechste Welle (6) ständig mit dem gemeinsamen Hohlrad des Ravigneaux-Satzes (9) verbunden und über die zweite Kupplung (16) mit der Antriebswelle (1) lösbar verbindbar ist, wobei die siebente Welle (7) ständig mit dem zweiten Sonnenrad des Ravigneaux - Satzes (9) verbunden und über die dritte Bremse (07) an das Gehäuse (G) des Getriebes ankoppelbar ist und wobei der Abtrieb über den Steg des Ravigneaux - Satzes (9) erfolgt.

9. Mehrstufengetriebe nach Anspruch 1, dadurch **gekennzeich-n et**, dass der dritte und der vierte Planetensatz (P3, P4) zu einem Ravigneaux-Satz (9) mit gemeinsamen Steg und gemeinsamen Hohlrad zusammengesetzt sind, wobei die vierte Welle (4) mit einem zweiten Sonnenrad des Ravigneaux-Satzes (9) verbunden ist, wobei die sechste Welle (6) mit dem gemeinsamen Steg verbunden und über die zweite Kupplung (16) mit der Antriebswelle (1) lösbar verbindbar ist, wobei die siebente Welle (7) mit dem ersten Sonnenrad des Ravigneaux-Satzes (9) verbunden und über die dritte Bremse (07) an das Gehäuse (G) des Getriebes ankoppelbar ist und wobei der Abtrieb über das gemeinsame Hohlrad des Ravigneaux-Satzes (9) erfolgt.

10. Mehrstufengetriebe nach einem der vorangehenden Ansprüche, **dadurch gekennzeichnet, dass** die dritte Kupplung (18) und/oder die dritte Bremse (07) als Klauenschaltelemente ausgeführt sind, wobei die erste und die zweite Kupplung (13, 16) und die erste und die zweite Bremse (03, 05) als Reibschaltelemente ausgeführt sind.

11. Mehrstufengetriebe nach einem der vorangehenden Ansprüche, **dadurch gekennzeichnet, dass** neun Vorwärtsgänge realisierbar sind, wobei sich der erste Gang durch Schließen der dritten Kupplung (18) und der zweiten und dritten Bremse (05, 07), der zweite Gang durch Schließen der ersten und dritten Bremse (03, 07) und der dritten Kupplung (18), der dritte Gang durch Schließen der dritten Bremse (07), der ersten und der dritten Kupplung (13, 18), der vierte Gang durch Schließen der dritten Bremse (07) und der zweiten Kupplung (16) und optional eines der Schaltelemente erste Bremse (03), erste Kupplung (13), zweite Bremse (05) oder dritte Kupplung (18), der fünfte Gang durch Schließen der ersten, zweiten und dritten Kupplung (13, 16, 18), der sechste Gang durch Schließen der ersten Bremse (03) und der zweiten und dritten Kupplung (16, 18), der siebte Gang durch Schließen der zweiten Bremse (05) und der zweiten und dritten Kupplung (16, 18), der achte Gang durch Schließen der ersten und zweiten Bremse (03, 05) und der zweiten Kupplung (16) und der neunte Gang durch Schließen der zweiten Bremse (05) und der ersten und zweiten Kupplung (13, 16) ergibt.

12. Mehrstufengetriebe nach einem der vorangehenden Ansprüche, **dadurch gekennzeichnet, dass** sich der Rückwärtsgang durch Schließen der zweiten und dritten Bremse (05, 07) und der ersten Kupplung (13) ergibt.

13. Mehrstufengetriebe nach einem der vorangehenden Ansprüche, **dadurch gekennzeichnet, dass** die den Vorschaltradsatz bildenden Planetensätze (P1, P2) radial betrachtet übereinander angeordnet sind, wodurch sich die insgesamt vier Planetensätze räumlich axial betrachtet auf drei Radsatzebenen beschränken.

14. Mehrstufengetriebe nach einem der vorangehenden Ansprüche, **dadurch gekennzeichnet, dass** die erste Kupplung (13) und die erste Bremse (03) einen gemeinsamen Lamellenträger, insbesondere einen Innenlamellenträger, aufweisen.

## Claims

1. Multi-stage gearbox of planetary construction, in particular automatic gearbox for a motor vehicle, comprising an input shaft (1) and an output shaft (2) which are arranged in a housing (G); four planetary gear sets (P1, P2, P3, P4) and at least six shifting elements (03, 05, 07, 13, 16, 18), comprising a first brake (03), a second brake (05), a third brake (07), a first clutch (13), a second clutch (16) and a third clutch (18), selective engagement of which effects different transmission ratios between the input shaft (1) and the output shaft (2) so that nine forward gears and one reverse gear can be implemented, the first and the second planetary gear set (P1, P2) forming an input gear set and the third and the fourth planetary gear set (P3, P4) forming the main gear set, wherein a first rotatable shaft (1), a second rotatable shaft (2), a third rotatable shaft (3), a fourth rotatable shaft (4), a fifth rotatable shaft (5), a sixth rotatable shaft (6) and a seventh rotatable shaft (7) are present, and wherein the ring gear of the second planetary gear set (P2) is couplable by means of the fifth shaft (5) via the second brake (05) to the housing (G) of the gearbox and wherein the seventh shaft (7) is permanently connected to at least one element of the main gear set and is couplable via the third brake (07) to the housing (G) of the gearbox, the sixth shaft (6) is permanently connected to at least one further element of the main gear set and is releasably connectable via the second clutch (16) to the input shaft, and the output shaft (2) is permanently connected to at least one further element of the main gear set, **characterized in that** the input gear set is shiftable, **in that** at least an eighth rotatable shaft (8) is present, the carriers of the first and second planetary gear sets (P1, P2) being coupled to one another via the fourth shaft (4) which is connected to an element of the main gear set, the ring gear of the first planetary gear set (P1) being coupled to the sun gear of the second planetary gear set (P2) via the eighth shaft (8) which is releasably connectable via the third clutch (18) to the input shaft (1), the sun gear of the first planetary gear set (P1) being couplable by means of the third shaft (3) via the first brake (03) to the housing (G) of the gearbox and being releasably connectable via the first clutch (13) to the input shaft (1).

2. Multi-stage gearbox according to Claim 1, **characterized in that** the fourth shaft (4) is connected to the ring gear of the planetary gear set (P3), the sixth shaft (6) being permanently connected to the ring gear of the fourth planetary gear set (P4) and to the carrier of the third planetary gear set (P3) and being releasably connectable via the second clutch (16) to the input shaft (1), the seventh shaft (7) being permanently connected to the sun gears of the third and fourth planetary gear sets (P3, P4) and being couplable via the third brake (07) to the housing (G) of the gearbox, and the output drive being effected via the output shaft (2), which is permanently connected to the carrier of the fourth planetary gear set (P4).

3. Multi-stage gearbox according to Claim 2, **characterized in that** the main gear set comprising the third and the fourth planetary gear set (P3, P4) is in the form of a Simpson gear set having a common wide sun gear, two carriers and two ring gears, the seventh shaft (7) being connected to the common sun gear.

4. Multi-stage gearbox according to Claim 2 or 3, **characterized in that** the second clutch (16) is arranged upstream of the main gear set in the power flow direction when viewed axially.

5. Multi-stage gearbox according to Claim 2 or 3, **characterized in that** the second clutch (16) is arranged between the main gear set and the input gear set when viewed axially.

6. Multi-stage gearbox according to Claim 1, **characterized in that** the fourth shaft (4) is connected to the sun gear of the third planetary gear set (P3), the sixth shaft (6) being permanently connected to the carrier of the third planetary gear set (P3) and to the ring gear of the fourth planetary gear set (P4) and being releasably connectable via the second clutch (16) to the input shaft (1), the seventh shaft (7) being permanently connected to the sun gear of the fourth planetary gear set (P4) and being couplable via the third brake (07) to the housing (G) of the gearbox, and the output shaft (2) being connected permanently to the ring gear of the third planetary gear set (P3) and to the carrier of the fourth planetary gear set (P4).

7. Multi-stage gearbox according to Claim 6, **characterized in that** the second clutch (16) is arranged between the planetary gear sets (P3, P4) of the main gear set, when viewed axially.

8. Multi-stage gearbox according to Claim 1, **characterized in that** the third and the fourth planetary gear set (P3, P4) are combined or reduced to form a Ravigneaux set (9) having a common carrier and a common ring gear, the fourth shaft (4) being connected to the first sun gear of the Ravigneaux set (9), the sixth shaft (6) being permanently connected to the common ring gear of the Ravigneaux set (9) and being releasably connectable via the second clutch (16) to the input shaft (1), the seventh shaft (7) being permanently connected to the second sun gear of the Ravigneaux set (9) and being couplable via the third brake (07) to the housing (G) of the gearbox, and the output drive being effected via the carrier of the Ravigneaux set (9).

9. Multi-stage gearbox according to Claim 1, **characterized in that** the third and the fourth planetary gear set (P3, P4) are combined to form a Ravigneaux set (9) having a common carrier and a common ring gear, the fourth shaft (4) being connected to a second sun gear of the Ravigneaux set (9), the sixth shaft (6) being connected to the common carrier and being releasably connectable via the second clutch (16) to the input shaft (1), the seventh shaft (7) being connected to the first sun gear of the Ravigneaux set (9) and being couplable via the third brake (07) to the housing (G) of the gearbox, and the output drive being effected via the common ring gear of the Ravigneaux set (9).

10. Multi-stage gearbox according to any one of the preceding claims, **characterized in that** the third clutch (18) and/or the third brake (07) are in the form of claw shifting elements, the first and the second clutch (13, 16) and the first and the second brake (03, 05) being in the form of friction shifting elements.

11. Multi-stage gearbox according to any one of the preceding claims, **characterized in that** nine forward gears can be implemented, the first gear being effected by closing the third clutch (18) and the second and third brake (05, 07), the second gear by closing the first and third brakes (03, 07) and the third clutch (18), the third gear by closing the third brake (07) and the first and third clutches (13, 18), the fourth gear by closing the third brake (07) and the second clutch (16) and optionally one of the shifting elements: first brake (03), first clutch (13), second brake (05) or third clutch (18), the fifth gear by closing the first, second and third clutches (13, 16, 18), the sixth gear by closing the first brake (03) and the second and third clutches (16, 18), the seventh gear by closing the second brake (05) and the second and third clutches (16, 18), the eighth gear by closing the first and second brakes (03, 05) and the second clutch (16) and the ninth gear by closing the second brake (05) and the first and second clutches (13, 16).

12. Multi-stage gearbox according to any one of the preceding claims, **characterized in that** the reverse gear is effected by closing the second and third brakes (05, 07) and the first clutch (13).

13. Multi-stage gearbox according to any one of the preceding claims, **characterized in that** the planetary gear sets (P1, P2) forming the input gear set are arranged one above the other when viewed radially, whereby the four planetary gear sets in total are restricted to three gear set planes when viewed axially.

14. Multi-stage gearbox according to any one of the preceding claims, **characterized in that** the first clutch (13) and the first brake (03) have a common disc carrier, in particular an inner disc carrier.

## Revendications

1. Boîte de vitesses multi-étages dans un type de construction planétaire, notamment transmission automatique pour un véhicule automobile, comprenant un arbre d'entraînement (1) et un arbre de sortie (2), qui sont disposés dans un logement (G), quatre trains d'engrenages planétaires (P1,P2,P3,P4), ainsi qu'au moins six éléments de commutation (03,05,07,13,16,18), comprenant un premier frein (03), un deuxième frein (05), un troisième frein (07), un premier embrayage (13), un deuxième embrayage (16) et un troisième embrayage (18), dont l'engrenage sélectif provoque différents rapports de transmission entre l'arbre d'entraînement (1) et l'arbre de sortie (2), de telle sorte que neufs rapports de marche avant et un rapport de marche arrière puissent être réalisés, dans laquelle les premier et deuxième trains d'engrenages planétaires (P1,P2) forment un train d'engrenages en amont et les troisième et quatrième trains d'engrenages planétaires (P3,P4) forment le train d'engrenages principal, dans laquelle un premier arbre rotatif (1), un deuxième arbre rotatif (2), un troisième arbre rotatif (3), un quatrième arbre rotatif (4), un cinquième arbre rotatif (5), un sixième arbre rotatif (6) et un septième arbre rotatif (7) sont présents, et dans laquelle la couronne dentée du deuxième train d'engrenages planétaires (P2) peut être couplée au moyen du cinquième arbre (5) par l'intermédiaire du deuxième frein (05) au logement (G) de la boîte de vitesses et dans laquelle le septième arbre (7) est relié fermement à au moins un élément du train d'engrenages principal et par l'intermédiaire du troisième frein (07) au logement (G) de la boîte de vitesses, le sixième arbre (6) est relié fermement à au moins un autre élément du train d'engrenages principal et peut être relié de manière réversible par l'intermédiaire du deuxième embrayage (16) à l'arbre d'entraînement et l'arbre d'entraînement (2) et relié fermement à au moins un autre élément du train d'engrenages principal, **caractérisée en ce que** le train d'engrenages en amont peut être soumis à des changements de vitesses, **en ce que** au moins un huitième arbre rotatif (8) est prévu, dans laquelle les porte-satellites des premier et deuxième trains d'engrenages planétaires (P1,P2) sont couplés les uns aux autres par l'intermédiaire du quatrième arbre (4), qui est relié à un élément du train d'engrenages principal, dans laquelle la couronne dentée du premier train d'engrenages planétaires (P1) est couplée à l'engrenage solaire du deuxième train d'engrenages planétaires (P2) par l'intermédiaire du huitième arbre (8), qui peut être relié de manière réversible par l'intermédiaire du troisième embrayage (18) à l'arbre d'entraînement (1), dans laquelle l'engrenage solaire du premier train d'engrenages planétaires (P1) peut être couplé au moyen du troisième arbre (3) par l'intermédiaire du premier frein (03) au logement (G) de la boîte de vitesses et peut être relié de manière réversible par l'intermédiaire du premier embrayage (13) à l'arbre d'entraînement (1).

2. Boîte de vitesses multi-étages selon la revendication 1, **caractérisée en ce que** le quatrième arbre (4) est relié à la couronne dentée du train d'engrenages planétaire (P3), dans laquelle le sixième arbre (6) est relié fermement à la couronne dentée du quatrième train d'engrenages planétaires (P4) et au porte-satellite du troisième train d'engrenages planétaires (P3) et peut être relié de manière réversible par l'intermédiaire du deuxième embrayage (16) à l'arbre d'entraînement (1), dans laquelle le septième arbre (7) est relié fermement aux engrenages solaires des troisième et quatrième trains d'engrenages planétaires (P3,P4) et peut être couplé par l'intermédiaire du troisième frein (07) au logement (G) de la boîte de vitesses et dans laquelle la sortie a lieu par l'intermédiaire de l'arbre de sortie (2) relié fermement au porte-satellite du quatrième train d'engrenages planétaires (P4).

3. Boîte de vitesses multi-étages selon la revendication 2, **caractérisée en ce que** le train d'engrenages principal comprenant les troisième et quatrième trains d'engrenages planétaires (P3,P4) est réalisé comme un train d'engrenages Simpson avec un engrenage solaire large commun, deux porte-satellites et deux couronnes dentées, dans laquelle le septième arbre (7) est relié à l'engrenage solaire commun.

4. Boîte de vitesses multi-étages selon les revendications 2 ou 3, **caractérisée en ce que** le deuxième engrenage (16) est disposé avant le train d'engrenages principal dans la direction de flux de force considérée axialement.

5. Boîte de vitesses multi-étages selon les revendications 2 ou 3, **caractérisée en ce que** le deuxième embrayage (16) considéré axialement est disposé entre le train d'engrenages principal et le train d'engrenages en amont.

6. Boîte de vitesses multi-étages selon la revendication 1, **caractérisé en ce que** le quatrième arbre (4) est relié à l'engrenage solaire du troisième train d'engrenages planétaires (P3), dans laquelle le sixième arbre (6) est relié fermement au porte-satellite du troisième train d'engrenages planétaires (P3) et à la couronne dentée du quatrième train d'engrenages planétaires (P4) et peut être relié de manière réversible par l'intermédiaire du deuxième embrayage (16) à l'arbre d'entraînement (1) le septième arbre (7) est relié fermement à l'engrenage solaire du quatrième train d'engrenages planétaires (P4) et peut être couplé par l'intermédiaire du troisième frein (07) au logement (G) de la boîte de vitesses et dans laquelle l'arbre d'entraînement (2) est relié fermement à la couronne dentée du troisième train d'engrenages planétaires (P3) et au porte-satellite du quatrième train d'engrenages planétaires (P4).

7. Boîte de vitesses multi-étages selon la revendication 6, **caractérisée en ce que** les deuxième embrayage (16) considéré axialement est disposé entre les trains d'engrenages planétaires (P3,P4) du train d'engrenages principal.

8. Boîte de vitesses multi-étages selon la revendication 1, **caractérisée en ce que** les troisième et quatrième trains d'engrenages planétaires (P3,P4) sont rassemblés, respectivement réduits en un train d'engrenages Ravigneaux (9) avec porte-satellite commun et couronne dentée commune, dans laquelle le quatrième arbre (4) est relié au premier engrenage solaire du train d'engrenages Ravigneaux (9), dans laquelle le sixième arbre (6) est relié fermement à la couronne dentée commune du train d'engrenages Ravigneaux (9) et peut être relié de manière réversible par l'intermédiaire du deuxième embrayage (16) à l'arbre d'entraînement (1), dans laquelle le septième arbre (7) est relié fermement au deuxième engrenage solaire du train d'engrenages Ravigneaux (9) et peut être couplé par l'intermédiaire du troisième frein (07) au logement (G) de la boîte de vitesses et dans laquelle la sortie a lieu par l'intermédiaire du porte-satellite du train d'engrenages Ravigneaux (9).

9. Boîte de vitesses multi-étages selon la revendication 1, **caractérisée en ce que** les troisième et quatrième trains d'engrenages planétaires (P3,P4) sont assemblés en un train d'engrenages Ravigneaux commun (9) avec porte-satellite commun et couronne dentée commune, dans laquelle le quatrième arbre (4) est relié à un deuxième engrenage solaire du train d'engrenages Ravigneaux (9), dans laquelle le sixième arbre (6) est relié au porte-satellite commun et peut être relié de manière réversible par l'intermédiaire du deuxième embrayage (16) à l'arbre d'entraînement (1), dans laquelle le septième arbre (7) est relié au premier engrenage solaire du train d'engrenages Ravigneaux (9) et peut être couplé par l'intermédiaire du troisième frein (07) au logement (G) de la boîte de vitesses et dans laquelle la sortie a lieu par l'intermédiaire de la couronne dentée commun du train d'engrenages Ravigneaux (9).

10. Boîte de vitesses multi-étages selon une des revendications précédentes, **caractérisée en ce que** le troisième embrayage (18) et/ou le troisième frein (07) sont réalisés comme des éléments de changement de vitesses à griffes, dans laquelle le premier et le deuxième embrayage (13,16) et le premier et le deuxième frein (03,05) sont réalisés comme des éléments de changement de vitesses à friction.

11. Boîte de vitesses multi-étages selon une des revendications précédentes, **caractérisée en ce que** neufs rapports de marche avant peuvent être réalisés, dans laquelle le premier rapport de marche résulte de la fermeture du troisième embrayage (18) et du deuxième et troisième frein (05,07), le deuxième rapport de marche résulte de la fermeture du premier et troisième frein (03,07) et du troisième embrayage (18), le troisième rapport de marche résulte de la fermeture du troisième frein (07) et du premier et troisième embrayage (13,18), le quatrième rapport de marche résulte de la fermeture du troisième frein (07) et du deuxième embrayage et en option d'un des éléments de changement de vitesses du premier frein (03), premier embrayage (13), deuxième frein (05) et troisième embrayage (18), le cinquième rapport de marche résulte de la fermeture du premier, deuxième et troisième embrayage (13,16,18), le sixième rapport de marche résulte de la fermeture du premier frein (03) et du deuxième et troisième embrayage (16,18), le septième rapport de marche résulte de la fermeture du deuxième frein (05) et du deuxième et troisième embrayage (16,18), le huitième rapport de marche résulte de la fermeture du premier et du deuxième frein (03,05) et du deuxième embrayage (16) et le neuvième rapport de marche résulte de la fermeture du deuxième frein (05) et du premier et deuxième embrayage (13,16).

12. Boîte de vitesses multi-étages selon une des revendications précédentes, **caractérisée en ce que** le rapport de marche arrière résulte de la fermeture du deuxième et troisième frein (05,07) et du premier embrayage (13).

13. Boîte de vitesses multi-étages selon une des revendications précédentes, **caractérisé en ce que** les trains d'engrenages planétaires (P1,P2) formant le train d'engrenages en amont considérés radialement sont disposés les uns sur les autres, moyennant quoi les quatre trains d'engrenages planétaires au total sont délimités spatialement, considérés axialement, sur trois niveaux de trains d'engrenages.

14. Boîte de vitesses multi-étages selon une des revendications précédentes, **caractérisée en ce que** le premier embrayage (13) et le premier frein (03) présentent un support de lamelles commun, notamment un support de lamelles intérieur.
